# EUROPEAN PATENT SPECIFICATION

(11) **EP 3 518 142 B1**
(45) Date of publication and mention of the grant of the patent: **21.08.2024**
(21) Application number: 19153457.7
(22) Date of filing: 24.01.2019
(51) Int. Cl.: G06V 10/82, G06V 30/40

(54) **CROSS-LINGUAL TEXT CLASSIFICATION USING CHARACTER EMBEDDED DATA STRUCTURES**
QUERSPRACHLICHE TEXTKLASSIFIZIERUNG UNTER VERWENDUNG VON IN CHARAKTER EINGEBETTETEN DATENSTRUKTUREN
CLASSIFICATION DE TEXTE INTER-LINGUE À L'AIDE DE STRUCTURES DE DONNÉES À CARACTÈRE INCORPORÉ

(30) Priority: 30.01.2018 US 201815883947
(43) Date of publication of application: 31.07.2019
(73) Proprietor: Accenture Global Solutions Limited, Dublin 4 (IE)
(72) Inventor: TYAMAGONDLU NAGABHUSHAN, Shashi Bhushan, Dublin, A94 N567 (IE)
(74) Representative: Müller-Boré & Partner Patentanwälte PartG mbB

(56) References cited:
- US-A1- 2014 279 774
- JINGZHOU LIU ET AL: "Deep Learning for Extreme Multi-label Text Classification", RESEARCH AND DEVELOPMENT IN INFORMATION RETRIEVAL, ACM, 2 PENN PLAZA, SUITE 701NEW YORKNY10121-0701USA, 7 August 2017 (2017-08-07), pages 115 - 124, XP058368359, ISBN: 978-1-4503-5022-8, DOI: 10.1145/3077136.3080834
- PENG JIN ET AL: "Bag-of-Embeddings for Text Classification", 15 July 2016 (2016-07-15), XP055595987, Retrieved from the Internet <URL:https://www.ijcai.org/Proceedings/16/Papers/401.pdf> [retrieved on 20190612]
- HUANG CHAOCHAO ET AL: "Text Classification with Document Embeddings", INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, vol. 8801 Chap.12, no. 558, 18 October 2014 (2014-10-18), pages 131 - 140, XP047299872, ISBN: 978-3-642-17318-9
- VEENA P V ET AL: "An effective way of word-level language identification for code-mixed facebook comments using word-embedding via character-embedding", 2017 INTERNATIONAL CONFERENCE ON ADVANCES IN COMPUTING, COMMUNICATIONS AND INFORMATICS (ICACCI), IEEE, 13 September 2017 (2017-09-13), pages 1552 - 1556, XP033276168, DOI: 10.1109/ICACCI.2017.8126062
- YOON KIM ET AL: "Character-Aware Neural Language Models", 16 October 2015 (2015-10-16), XP055466626, Retrieved from the Internet <URL:https://arxiv.org/pdf/1508.06615v3.pdf> [retrieved on 20180412]

## Description

### BACKGROUND

Text classification, also known as document classification, is a method of assigning one or more classifications, labels, or categories to a document or other body of text. Text may be classified in a variety of ways (e.g., according to subject, intent, type, and/or other attribute) and for a variety of reasons (e.g., to organize text, sort text, search text, or the like).
Further, JINGZHOU LIU ET AL, "Deep Learning for Extreme Multi-label Text Classification", RESEARCH AND DEVELOPMENT IN INFORMATION RETRIEVAL, ACM, 2 PENN PLAZA, SUITE 701NEW YORKNY10121-0701USA, (20170807), doi: 10.1145/3077136.3080834, ISBN 978-1-4503-5022-8, pages 115 - 124 relates to applying deep learning for extreme multi-label text classification.
Peng Jin ET AL, "Bag-of-Embeddings for Text Classification", (20160715), URL: https://www.ijcai.org/Proceedings/16/Papers/401.pdf, relates to the use of word embeddings for text classification.
US 2014/0279774 A1 relates to methods, systems, and apparatus, including computer programs encoded on computer storage media, for scoring concept terms using a deep network. One of the methods includes receiving an input comprising a plurality of features of a resource, wherein each feature is a value of a respective attribute of the resource; processing each of the features using a respective embedding function to generate one or more numeric values; processing the numeric values using one or more neural network layers to generate an alternative representation of the features, wherein processing the floating point values comprises applying one or more non-linear transformations to the floating point values; and processing the alternative representation of the input using a classifier to generate a respective category score for each category in a pre-determined set of categories, wherein each of the respective category scores measure a predicted likelihood that the resource belongs to the corresponding category.
VEENA P V ET AL: "An effective way of word-level language identification for code-mixed facebook comments using word-embedding via characterembedding", 2017 INTERNATIONAL CONFERENCE ON ADVANCES IN COMPUTING, COMMUNICATIONS AND INFORMATICS (ICACCI), IEEE, 13 September 2017 (2017-09-13), pages 1552-1556, DOI: 10.1109/ICACCI.2017.8126062 describes a system for word-level language identification on code-mixed social media text. The methodology used for the system is based on features obtained from character-based embedding technique with the context information and uses a machine learning based classifier, Support Vector Machine for training and testing.
Yoon Kim ET AL: "Character-Aware Neural Language Models", 16 October 2015 (2015-10-16), Retrieved from the Internet: URL:https://arxiv.org/pdf/1508.06615v3.pdf describes a neural language model that relies only on character-level inputs, in which predictions are still made at the word-level. The model employs a convolutional neural network (CNN) and a highway network over characters, whose output is given to a long short-term memory (LSTM) recurrent neural network language model (RNN-LM).
Thus, according to an aspect, the problem relates to improve the automatic classification of documents.

### SUMMARY

This problem is solved by the subject-matter of the independent claims. Preferred embodiments are defined in the dependent claims..

### BRIEF DESCRIPTION OF THE DRAWINGS

Figs. 1A and 1B are diagrams of overviews of example implementations described herein;
Fig. 2 is a diagram of an example environment in which systems and/or methods, described herein, may be implemented;
Fig. 3 is a diagram of example components of one or more devices of Fig. 2;
Fig. 4 is a flow chart of an example process for cross-lingual text classification; and
Fig. 5 is a diagram of an example implementation relating to the example process shown in Fig. 4.

### DETAILED DESCRIPTION

The following detailed description of example implementations refers to the accompanying drawings. The same reference numbers in different drawings may identify the same or similar elements.

A variety of different text classification techniques may be capable of classifying text in a variety of ways. Example text classification techniques may include and/or otherwise make use of a variety of machine learning techniques, such as naive Bayes classification, latent semantic indexing, support vector machines (SVM), K-nearest neighbors, artificial neural networks, or the like. Depending on a variety of factors, including the types of text, amount of text, variance of text, type of classification, and/or other factors, some text classification techniques perform better than others (e.g., in different situations). For example, classifying text by intent or subject, which often involves complex semantic analysis of text, may be difficult for some techniques, especially in situations where the type and amount of text are complex, such as cross-lingual text (texts in multiple languages).

Some implementations, described herein, may provide a text classification platform that uses a convolutional neural network to classify text in a manner designed to be agnostic regarding the natural language of the text. For example, a text classification platform may receive a document as input, provide the characters of the document as input to an input layer, use an embedding layer to provide a representation of each document using a data structure (e.g., a character vector), apply one or more stacked convolution layers to the data structures, apply parallel convolution layers with different filter sizes on the output of the stacked convolution layers, perform max over-time pooling for each of the parallel convolution layers, merge the output of the parallel convolution layers, provide the merged output to one or more fully connected layers to calculate probabilities associated with the classifications, and to provide the calculated probabilities to an inference layer to select one or more classifications for the document. In addition, the text classification platform may make use of backpropagation techniques to train the convolutional neural network in a manner designed to increase the accuracy of the convolutional neural network.

In this way, the text classification platform can classify text into one or more classifications (e.g., classes, categories, labels, or the like). The text classified may vary in a variety of ways, including by natural language, and the text classification platform does not need to train or otherwise make use of separate models or artificial neural networks for different languages. The text classification performed by the text classification platform may improve the efficiency of text classification, e.g., by performing text classification using fewer computing resources, such as processing resources, memory resources, or the like, than other text classification techniques. In addition, in some implementations, the text classification platform may enable the classification of hundreds, thousands, millions, etc., of documents from hundreds, thousands, millions, etc., of sources. Accordingly, the text classification platform may operate upon data items that cannot be processed objectively by a human actor.

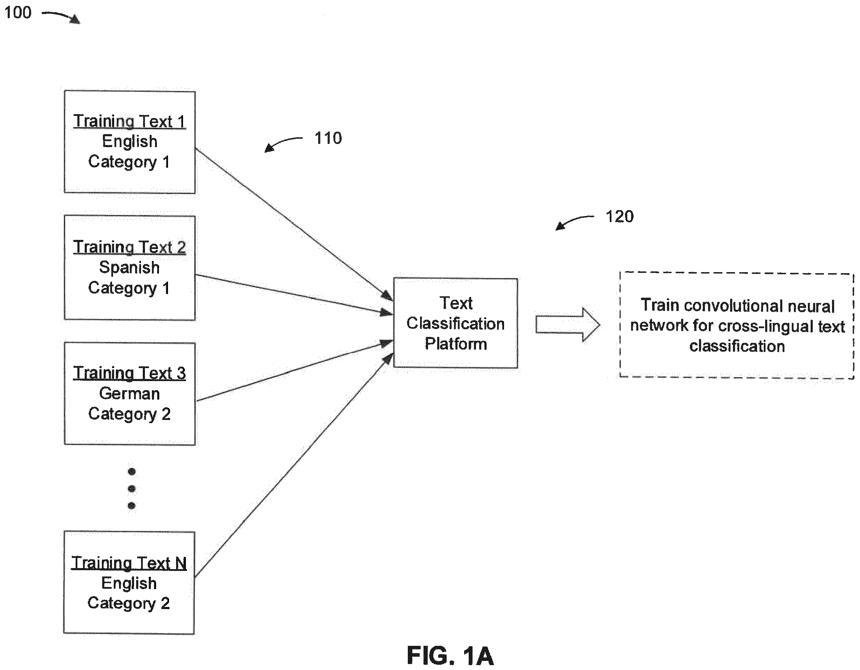

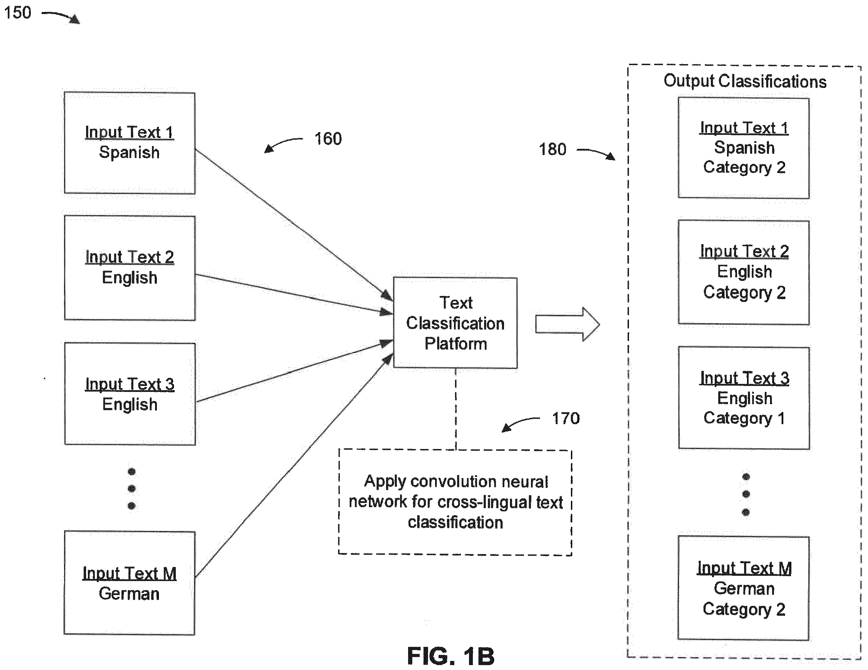

Figs. 1A and 1B are diagrams of overviews of example implementations described herein. As shown in Fig. 1A, example implementation 100 includes a text classification platform. In some implementations, the text classification platform may include a cloud computing platform, one or more server devices, or the like. The text classification platform may be associated with an entity that wishes to classify documents for a variety of purposes (e.g., to classify micro-blog posts for user sentiment, to classify e-mails for intended purpose, to classify scholarly articles for subjects, or the like).

As shown in Fig. 1A, and by reference number 110, text classification platform receives training documents. The training documents may be in a variety of languages and be associated with a variety of classifications. By way of example, the training documents may be e-mail messages written in various languages and sent for a variety of purposes. For example, one e-mail may include training text 1, written in English, and belonging to a first classification; another e-mail may include training text 2, written in Spanish, and also belonging to the first classification; a third e-mail may include training text 3, written in German, and belonging to a second classification; and an example Nth e-mail may include training text N, written in English, and belonging to the second classification. The training text (e.g., included, in this example, in e-mail documents) may come from a variety of sources, including client devices, server devices, or the like.

As further shown in Fig. 1A, and by reference number 120, text classification platform trains a convolutional neural network to perform cross-lingual text classification. The process of training the convolutional neural network is described generally above and in further detail, below. In the example implementation 100, the convolutional neural network is trained using supervised machine learning (e.g., using previously provided classifications provided for the training documents), though the specific details of the machine learning techniques may vary (e.g., different labels and/or the like).

As shown in Fig. 1B, example implementation 150 includes a text classification platform (e.g., as trained in a manner similar to that shown and described above with reference to example implementation 100). As shown by reference number 160, the text classification platform receives input documents (e.g., including input text 1, 2, 3... M). The input text may be in any language, e.g., as indicated by input text 1 being in Spanish, input texts 2 and 3 being in English, and input text M being in German. In addition, the input documents may be provided from any number of sources.

As further shown in Fig. 1B, and by reference number 170, the text classification platform applies a convolutional neural network trained for cross-lingual text classification, such as the convolutional neural network trained in example implementation 100. The application of the convolutional neural network may be performed in a manner similar to the training of the convolutional neural network, e.g., as described generally, above, and in further detail, below.

As further shown in Fig. 1B, and by reference number 180, the text classification platform produces, as output from the application of the convolutional neural network, classifications (e.g., categories, labels, or the like), for each of the input documents. In the example implementation 150, input text 1 has been classified as belonging to category 2, input text 2 has been classified as belonging to category 2, input text 3 has been classified as belonging to category 1, and input text M has been classified as belonging to category 2. The classifications may be associated with the input documents in a variety of ways and, in some implementations, the text classification platform may store, communicate, cause display of, or otherwise make use of data indicating the classifications associated with the input documents.

As noted above, the text classified may vary in a variety of ways, including the natural language of the text, and the text classification platform does not need to train or otherwise make use of separate models or artificial neural networks for different languages. The text classification performed by the text classification platform may improve the efficiency of text classification, e.g., by performing text classification using fewer computing resources, such as processing resources, memory resources, or the like, than other text classification techniques. In addition, in some implementations, the text classification platform may enable the classification of hundreds, thousands, millions, etc., of documents from hundreds, thousands, millions, etc., of sources.

As indicated above, Figs. 1A and 1B are provided merely as examples. Other examples are possible and may differ from what was described with regard to Figs. 1A and 1B.

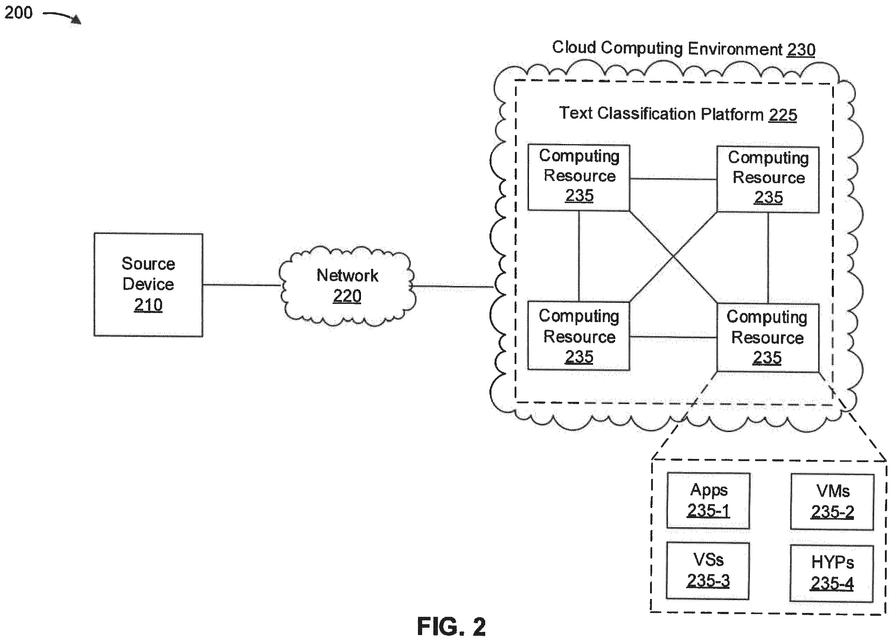

Fig. 2 is a diagram of an example environment 200 in which systems and/or methods, described herein, may be implemented. As shown in Fig. 2, environment 200 may include source device 210, network 220, and text classification platform 225 hosted within a cloud computing environment 230. Devices of environment 200 may interconnect via wired connections, wireless connections, or a combination of wired and wireless connections.

Source device 210 includes one or more devices capable of receiving, generating, storing, processing, and/or providing information associated with documents (e.g., data representing text). For example, source device 210 may include a communication and/or computing device, such as a mobile phone (e.g., a smart phone, a radiotelephone, etc.), a laptop computer, a tablet computer, a handheld computer, a server computer, a gaming device, a wearable communication device (e.g., a smart wristwatch, a pair of smart eyeglasses, etc.), or a similar type of device. In some implementations, source device 210 may include a system comprising multiple devices, such as a group of server devices associated with documents, a group of server devices associated with a database of documents, a group of server devices of a data center, or the like. Source device 210 may include one or more applications for providing documents to text classification platform 225, such as a web browsing application, e-mail management application, document management application, or the like.

Network 220 includes one or more wired and/or wireless networks. For example, network 220 may include a cellular network (e.g., a long-term evolution (LTE) network, a code division multiple access (CDMA) network, a 3G network, a 4G network, a 5G network, another type of next generation network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

Text classification platform 225 includes one or more devices capable of receiving, generating, storing, processing, and/or providing information associated with documents and classifications associated with documents. While the example environment 200 indicates that text classification platform 225 is implemented in a cloud computing environment 230, in some implementations, text classification platform 225 may be implemented by one or more other types of devices as well, such as a server computer outside of a cloud computing environment or the like. Text classification platform 225 is capable of using data, including documents, provided by one source device 210 or many source devices 210 to train and/or apply a convolutional neural network for classifying text included in documents.

Cloud computing environment 230 includes an environment that delivers computing as a service, whereby shared resources, services, etc. may be provided. Cloud computing environment 230 may provide computation, software, data access, storage, and/or other services that do not require end-user knowledge of a physical location and configuration of a system and/or a device that delivers the services. As shown, cloud computing environment 230 may include text classification platform 225 and computing resource 235.

Computing resource 235 includes one or more personal computers, workstation computers, server devices, or another type of computation and/or communication device. In some implementations, computing resource 235 may host text classification platform 225. The cloud resources may include compute instances executing in computing resource 235, storage devices provided in computing resource 235, data transfer devices provided by computing resource 235, etc. In some implementations, computing resource 235 may communicate with other computing resources 235 via wired connections, wireless connections, or a combination of wired and wireless connections.

As further shown in Fig. 2, computing resource 235 may include a group of cloud resources, such as one or more applications ("APPs") 235-1, one or more virtual machines ("VMs") 235-2, virtualized storage ("VSs") 235-3, one or more hypervisors ("HYPs") 235-4, or the like.

Application 235-1 includes one or more software applications that may be provided to or accessed by source device 210. Application 235-1 may eliminate a need to install and execute the software applications on source device 210. For example, application 235-1 may include software associated with text classification platform 225 and/or any other software capable of being provided via cloud computing environment 230. In some implementations, one application 235-1 may send/receive information to/from one or more other applications 235-1, via virtual machine 235-2.

Virtual machine 235-2 includes a software implementation of a machine (e.g., a computer) that executes programs like a physical machine. Virtual machine 235-2 may be either a system virtual machine or a process virtual machine, depending upon use and degree of correspondence to any real machine by virtual machine 235-2. A system virtual machine may provide a complete system platform that supports execution of a complete operating system ("OS"). A process virtual machine may execute a single program, and may support a single process. In some implementations, virtual machine 235-2 may execute on behalf of a user (e.g., using source device 210), and may manage infrastructure of cloud computing environment 230, such as data management, synchronization, or long-duration data transfers.

Virtualized storage 235-3 includes one or more storage systems and/or one or more devices that use virtualization techniques within the storage systems or devices of computing resource 235. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

Hypervisor 235-4 provides hardware virtualization techniques that allow multiple operating systems (e.g., "guest operating systems") to execute concurrently on a host computer, such as computing resource 235. Hypervisor 235-4 may present a virtual operating platform to the guest operating systems, and may manage the execution of the guest operating systems. Multiple instances of a variety of operating systems may share virtualized hardware resources.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

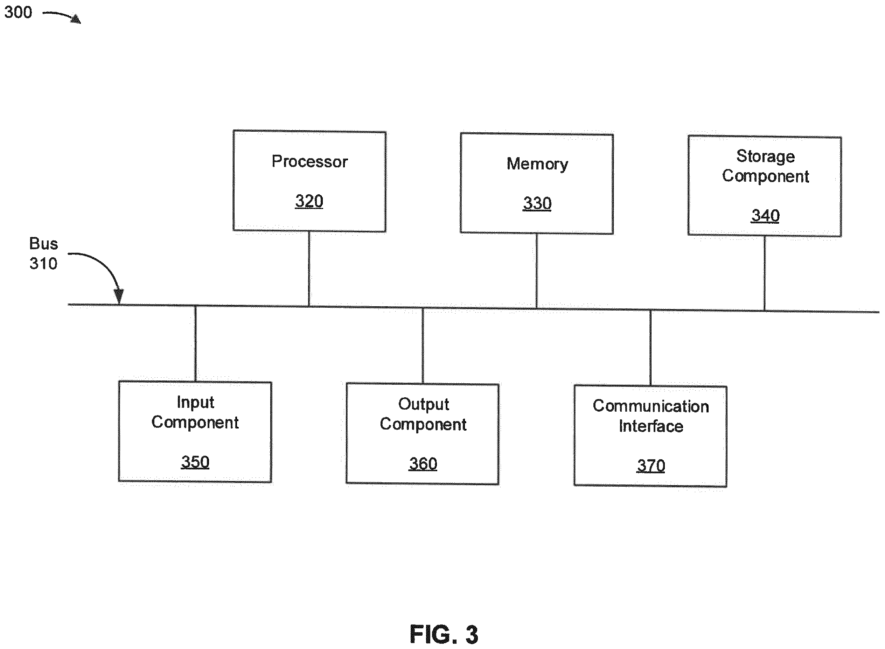

Fig. 3 is a diagram of example components of a device 300. Device 300 may correspond to source device 210 and/or text classification platform 225. In some implementations, source device 210 and/or text classification platform 225 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 includes a component that permits communication among the components of device 300. Processor 320 is implemented in hardware, firmware, or a combination of hardware and software. Processor 320 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, processor 320 includes one or more processors capable of being programmed to perform a function. Memory 330 includes a random access memory (RAM), a read only memory (ROM), and/or another type of dynamic or static storage device (e.g., a flash memory, a magnetic memory, and/or an optical memory) that stores information and/or instructions for use by processor 320.

Storage component 340 stores information and/or software related to the operation and use of device 300. For example, storage component 340 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 350 includes a component that permits device 300 to receive information, such as via user input (e.g., a touch screen display, a keyboard, a keypad, a mouse, a button, a switch, and/or a microphone). Additionally, or alternatively, input component 350 may include a sensor for sensing information (e.g., a global positioning system (GPS) component, an accelerometer, a gyroscope, and/or an actuator). Output component 360 includes a component that provides output information from device 300 (e.g., a display, a speaker, and/or one or more light-emitting diodes (LEDs)).

Communication interface 370 includes a transceiver-like component (e.g., a transceiver and/or a separate receiver and transmitter) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, and/or the like.

Device 300 may perform one or more processes described herein. Device 300 may perform these processes based on processor 320 executing software instructions stored by a non-transitory computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

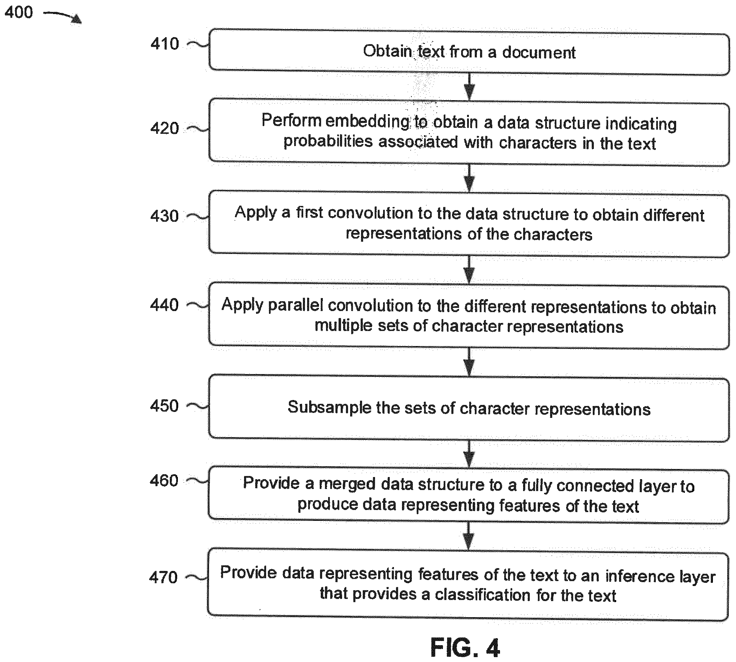

Fig. 4 is a flow chart of an example process 400 for cross-lingual text classification. In some implementations, one or more process blocks of Fig. 4 may be performed by text classification platform 225. In some implementations, one or more process blocks of Fig. 4 may be performed by another device or a group of devices separate from or including text classification platform 225, such as source device 210. In some implementations, process 400 is used to train a convolutional neural network (e.g., using, as input, multiple training documents with predetermined classifications). In some implementations, process 400 is used to apply a trained convolutional neural network (e.g., using, as input, documents for which a classification is to be produced).

As shown in Fig. 4, process 400 includes obtaining text from a document (block 410). For example, text classification platform 225 may receive data representing the text of a document. The text may be obtained in a variety of ways, including the use of an input stream, optical character recognition of an image that includes text, a text file, or the like. The text may be obtained from source device 210 or multiple source devices 210 (e.g., as micro-blog posts, e-mails, scholarly articles, or the like). Text classification platform 225 may read input text at a character level (e.g., rather than a sentence or word level).

Text classification platform 225 encodes the text, e.g., in a manner designed to enable various actions to be performed on the encoded text. In particular , the text isencoded using character-level one-hot encoding, for example to obtain a 1 by Z matrix (e.g., a one-hot vector) to distinguish each character in the text from each other character. In this situation, a one-hot vector may include 0's in all cells with the exception of a 1 in a cell used to uniquely identify the character. As noted above, using one-hot encoding on the input text enables actions to be performed on the one-hot vectors, which uniquely identify each character included in the text, regardless of language, which may increase the efficiency of the text classification process and conserve processing resources relative to other text classification techniques.

In this way, text classification platform 225 obtains text from a document, enabling text classification platform 225 to perform a variety of operations designed to classify the text.

As further shown in Fig. 4, process 400 includes performing embedding to obtain a data structure indicating probabilities associated with characters in the text (block 420). Specifically , text classification platform 225 provides the text to an embedding layer of a convolutional neural network. The embedding layer produces a representation of the text in a data structure, such as a character vector.

Text classification platform 225 uses the embedding layer to produce character vectors, which are representations of a vocabulary of characters, e.g., The character vectors indicate, for any character included in the text, a probability associated with each other character included in the text. This enables text classification platform 225 to produce a relatively dense, continuous, and distributed representation of the vocabulary, as opposed to a sparse representation that might be obtained by representing characters as one-hot encodings. The probabilities associated with the characters may indicate, for example, a measure of likelihood of a character occurring given the occurrence of another character, or the probability of other characters occurring given the character. Embedding layer may use a variety of techniques, such as skip-gram and/or continuous bag of words techniques, to produce the character vectors for the text of the document. Text classification platform 225 may use the embedding layer to produce character vectors in a manner designed to enable capturing information relevant to the text, such as syntactical and/or phonetic information, which may not be captured without the embedding layer.

In this way, text classification platform 225 performs embedding to obtain a data structure indicating probabilities associated with characters in the text, enabling text classification platform 225 to perform convolution on the character vectors.

As further shown in Fig. 4, process 400 includes applying a first convolution to the data structure to obtain different representations of characters (block 430). For example, text classification platform 225 may perform textual convolution on the character vectors to obtain representations relevant to the text (e.g., the hidden representations related to sequences of characters). Text classification platform 225 performs convolution by using a sliding window to analyze and learn hidden representations indicated by the sequence of character vectors.

By way of example, text classification platform 225 may perform convolution using a sliding window of 7 characters (though a window of additional or fewer characters could be used). The length of the sliding window may be predetermined or, in some implementations, vary as part of backpropagation and convolutional neural network training, described in further detail below. The convolution may be designed to identify 256 representations relevant to the text (though additional or fewer representations could be identified). In this situation, text classification platform 225 may produce, as output from the first convolution, 256 different character representations relevant to the text. For example, the character representations may include representations regarding the meaning of "-ing" or "-es" at the end of a string of characters, the meaning of "pre-" or "in-" at the beginning of a sequence of characters, or the like.

Text classification platform 225 performs stacked convolution. By stacking convolution layers of the convolutional neural network, text classification platform 225 may determine other representations relevant to the text. For example, text classification platform 225 may provide, to a second convolution layer, the output from the first convolution layer (e.g., in the example above, the 256 representations relevant to the text may be provided as input to a second convolution layer). In this situation, the second convolution layer produces representations relevant to the representations produced by the first convolution layer. The second convolution layer may use the same convolution parameters (e.g., sliding window of 7 to produce 256 representations) or different convolution parameters.

The representations obtained from stacked convolution layers in a situation where multiple convolution layers are applied may provide a resulting vector that indicates syntactic, semantic, phonetic, and/or morphological features of the text. These features may be obtained, for example, as a result of providing the convolutional layer(s) with the character vectors in the sequence of occurrence.

In this way, text classification platform 225 applies a first stacked convolution to the data structure to obtain different representations of characters, enabling further convolution operations to be applied to the different representations of characters.

As further shown in Fig. 4, process 400 includes applying parallel convolution to the different representations to obtain multiple character representations (block 440). For example, text classification platform 225 performs multiple different types of convolution on the output provided by the first stacked convolution (e.g., the representations produced by the first stacked convolution). The parallel convolution may result in various representations of characters being provided as output from the parallel convolution.

In some implementations, each convolution operation included in parallel convolution may be similar to the first convolution described above, where a sliding window is used to learn representations relevant to the characters. In this situation, each of the parallel convolutions are different, and are performed on the output of the first convolution. By way of example, text classification platform 225 may perform parallel convolution by performing multiple convolution operations, e.g., one with a sliding window of 4 characters, another with a sliding window of 5 characters, and another with a sliding window of 6 characters. As with the first convolution operation, the sliding window used by text classification platform 225 for parallel convolution may differ. Additionally, or alternatively, the number of relevant representations produced as output may differ, e.g., each different parallel convolution operation may provide the same or a different number of representations, such as 256 representations, 512 representations, or the like. In some implementations, one or more of the parallel convolution operations may include subsampling, or pooling, such as max over-time pooling, which is described in further detail, below.

In this way, text classification platform 225 applies parallel convolution to the different character representations to obtain multiple sets of character representations, enabling text classification platform 225 to perform subsampling on the multiple sets of character representations and to produce a merged data structure that includes character representations relevant to the text.

As further shown in Fig. 4, process 400 includes subsampling the multiple character representations (block 450). For example, text classification platform 225 may subsample the sets of character representations obtained from the output of parallel convolution. Subsampling is designed to down-sample the sets of character representations to reduce the dimensionality of the data, e.g., to prevent over-fitting by the convolutional neural network.

In some implementations, text classification platform 225 uses max over-time pooling to subsample the sets of character representations. For example, each set of character representations may be subsampled using a sliding window to analyze and reduce the dimensionality of the character representations. Other forms of subsampling (e.g., stochastic pooling, weighted subsampling, or the like) may also be used by text classification platform 225 to reduce the amount of character representations to be used for classification. In some implementations, the output of the subsampling may be a reduced size version (e.g., subsampled version) of the set of character representations, which may be reduced to a predetermined size for further processing.

In this way, text classification platform 225 may subsample the multiple character representations, enabling text classification platform 225 to merge the subsampled character representations into a merged data structure (e.g., in a pooling layer), and to use a fully connected layer on the subsampled and merged data structure. The merged data structure may, in some implementations, be a merged vector of features associated with the text. In some implementations, the merged data structure may be obtained by concatenating vectors obtained as a result of parallel convolution and subsampling.

As further shown in Fig. 4, process 400 includes providing the merged data structure to a fully connected layer to produce data representing features of the text (block 460). For example, text classification platform 225 may provide the merged data structure to a fully connected layer, of the convolutional neural network, that is capable of producing data representing features of text that may be useful for classifying the text. In some implementations, text classification platform 225 may use multiple fully connected layers applied serially (e.g., the output from one fully connected layer being used as input for a subsequent fully connected layer). The output from the fully connected layer(s) may be used by an inference layer, of the convolutional neural network, to classify the text.

Application of each fully connected layer includes the use of an activation function (e.g., Rectified Linear Unit (ReLU), Sigmoid, tanh, or the like) designed to introduce nonlinearity, in a manner designed to enable the convolutional neural network to learn non-linear representations in the data representing features of the text. By way of example, text classification platform 225 may apply two fully connected layers using ReLU activation, resulting in a non-linear function representing a variety of features of the text. In some implementations, the number of features provided as output from each fully connected layer may vary (e.g., 512 features of the text from the first fully connected layer, and 256 features of the text from the second fully connected layer, or the like), and in some implementations the number of features may be the same for each of the fully connected layers.

In some implementations, text classification platform 225 may apply a dropout operation to one or more of the fully connected layers, e.g., in a manner designed to avoid over-fitting. Dropout may be applied, for example, on a random or non-random basis, such as dropping 50% of the features from the merged data structure. In some implementations, when multiple fully connected layers are used, dropout may be applied for one or more of the fully connected layers (e.g., after each application of a fully connected layer, after every other application of a fully connected layer, once after all applications of the fully connected layers, or the like). By way of example, text classification platform 225 may provide the merged data structure to two fully connected layers, each with 50% dropout, the first fully connected layer being configured to provide 512 features of the text and the second fully connected layer being configured to use the output of the first fully connected layer to provide 256 features of the text.

In this way, text classification platform 225 may provide the merged data structure to a fully connected layer to produce data representing features of the text, enabling text classification platform 225 to make use of an inference layer, of the convolutional neural network, to classify the text of the document.

As further shown in Fig. 4, process 400 includes providing data representing features of the text to an inference layer that provides a classification for the text (block 470). For example, text classification platform 225 may provide the features output from the fully connected layer(s) to an inference layer that uses the features to determine one or more classifications to be associated with the text.

In some implementations, the inference layer determines the probability of distribution over the potential classifications. The probabilities may be used to classify the text of the document. For example, text classification platform 225 may use a threshold probability to determine that probabilities meeting a particular threshold for a given classification, or label, may be associated with the text of the document. In some implementations, text classification platform 225 may use a fully connected Softmax layer to calculate the probability distribution over the classifications. Softmax uses a vector of arbitrary real-valued scores (e.g., derived from the data provided by the fully connected layers applied at block 460) and produces a vector of values between 0 and 1, the sum of which are 1.

In some implementations, text classification platform 225 uses backpropagation to train the convolutional neural network. Backpropagation enables updating various parameters of the convolutional neural network, as well as the features and values associated with the features used to classify text. For example, text classification platform 225 may use stochastic gradient descent to iteratively adjust the convolutional neural network. Using backpropagation may result in a convolutional neural network training process similar to the following: initializing parameters of the convolutional neural network layers and weights associated with features, e.g., using random values; go through the convolutional neural network process described above, e.g., with respect to blocks 410 - 470; calculate an error in the output, e.g., using the probabilities output at block 470 and the expected probability provided with the training documents (the predetermined classifications); and using backpropagation to calculate gradients of the error with respect to the weights associated with the features of the text and using gradient descent to update the parameters of the convolutional neural network layers and weights associated with the features, e.g., in a manner designed to minimize the output error; and iteratively repeat the foregoing process using training documents provided with predetermined classifications.

Text classification platform 225 may use the foregoing forward propagation and backpropagation techniques to train the convolutional neural network (e.g., tuning the parameters and weights associated with the features), enabling the convolutional neural network to be applied to new text of new documents (e.g., text for which a classification has not been predetermined). When applying the convolutional neural network to a new document, backpropagation is not needed. In some implementations, the convolutional neural network may be retrained, or updated, using new training documents (or a combination of new training documents and preexisting training documents), which may include documents that text classification platform 225 previously classified (e.g., in situations where the classifications were manually confirmed or updated).

In this way, text classification platform 225 may provide data representing features of the text to an inference layer that provides a classification for the text, enabling text classification platform 225 to both train and apply the convolutional neural network to classify text.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

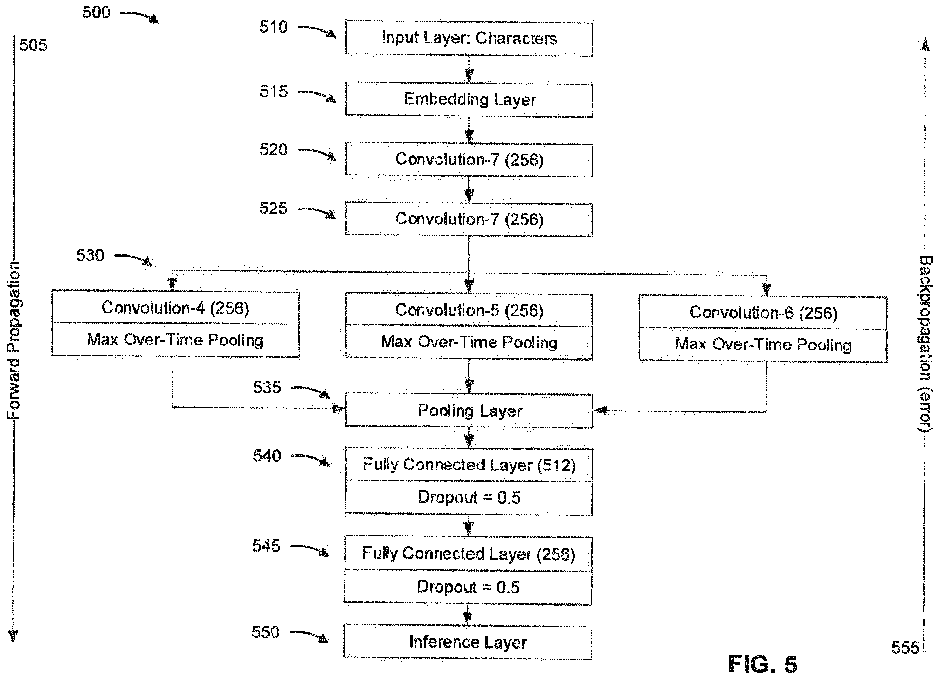

Fig. 5 is a diagram of an example implementation 500 relating to the example process shown in Fig. 4. Fig. 5 shows an example cross-lingual text classification process that may be implemented, for example, by text classification platform 225. The example implementation 500 illustrates both the application of the convolutional neural network (e.g., forward propagation 505) and training of the convolutional neural network (e.g., iterative application of forward propagation 505 and backpropagation 555).

As shown by reference number 510, the convolutional neural network includes an input layer that receives characters as input, such as the characters included in an e-mail or other document. As shown by reference number 515, the convolutional neural network includes an embedding layer that performs embedding on the input characters or representations of the characters in a situation where characters are encoded. The embedding layer may produce, for example, character vectors indicating a measure of probability that a character occurs, given the occurrence of another character.

As shown by reference numbers 520 and 525, the convolutional neural network includes two convolution layers, or stages. The two convolution layers operate upon the character embedding output (e.g., the character vectors), using sliding windows of 7 characters to obtain 256 features associated with the text. In the example implementation 500, the convolution layers operate serially, such that the output of the first convolution layer (e.g., first convolution neural network stage) is used as input for the second convolution layer (e.g., second convolution neural network stage).

As shown by reference number 530, the convolutional neural network includes a parallel convolution layer that, in the example implementation 500, provides three separate convolution layers performed on the output from the previous convolution layer. The parallel convolution layers each produce 256 features associated with the text while using, respectively, sliding windows of length 4, 5, and 6. While described as being performed in parallel, the parallel convolutions need not actually be executed in parallel, e.g., the parallel convolutions may be separately executed on the same input data. As shown in the example implementation 500, each of the parallel convolutions may have a corresponding subsampling layer to separately pool the features from each of the parallel convolutions. As shown by reference number 535, the convolutional neural network includes a pooling layer to pool together the output from the parallel convolution layer. The pooling layer may include subsampling, e.g., in a manner designed to drop features provided by the parallel convolution layer and avoid over fitting of the convolutional neural network.

As shown by reference numbers 540 and 545, the convolutional neural network includes two fully connected layers with 0.5 dropout, indicating that half of the features produced by each layer are dropped at random (e.g., half of the 512 produced by the first fully connected layer and half of the 256 produced by the second fully connected layer).

As shown by reference number 550, the convolutional neural network includes an inference layer to classify the text (e.g., associating classifications, categories, labels, or the like) using the features and weights provided by the fully connected layers. In situations where the convolutional neural network was previously trained, the classifications may be provided as output (e.g., to a separate device, such as source device 210, a storage device, or another device). The classifications may be used to indicate a classification, category, label, or the like, associated with the document from which the text came. The classifications may be used for a variety of purposes, including text categorization, indexing, sorting, analytics, or the like. In situations where the convolutional neural network is being trained, calculation of error and backpropagation 555 may be used to iteratively repeat the process and tune the parameters and weights associated with features accordingly.

As indicated above, Fig. 5 is provided merely as an example. Other examples are possible and may differ from what was described with regard to Fig. 5.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, or the like.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

No element, act, or instruction used herein should be construed as critical or essential unless explicitly described as such and recited in the independent claims. As used herein, the term "or the like" is intended to be inclusive (e.g., as in "and/or the like"), unless explicitly stated otherwise. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A device, comprising:
one or more memory devices; and
one or more processors, communicatively connected to the one or more memory devices, to:
obtain, at an input layer of a convolutional neural network, text from a document;
perform, at an embedding layer of the convolutional neural network, embedding to obtain a character vector indicating, for any character in the text, a probability associated with each other character included in the text;
apply, at a first convolution layer of the convolutional neural network, a first convolution to the character vector to obtain different first character representations relevant to the text, the first convolution using a first sliding window of characters;
provide the different first character representations obtained from the first convolution to a second convolution layer of the convolutional neural network performing a second convolution, the second convolution being configured to produce second character representations relevant to the first character representations obtained from the first convolution, the second convolution using a second sliding window of first characters representations;
apply, at a parallel convolution layer of the convolutional neural network, parallel convolution to the second character representations obtained from the second convolution to obtain multiple sets of third character representations;
subsample, at a pooling layer of the convolutional neural network, the multiple sets of third character representations and pool the subsampled multiple sets of third character representations into a merged data structure;
provide the merged data structure to a fully connected layer of the convolutional neural network, to produce data representing features of the text; and
provide the data representing features of the text to an inference layer of the convolutional neural network, that provides data indicating a classification for the text,
wherein the convolutional neural network has been trained with multiple training documents as input, the multiple training documents including a first document having text in a first natural language and a second document having text in a second natural language, the second natural language being different from the first natural language,
wherein the one or more processors are further configured to encode the text, prior to performing the embedding, using one-hot encoding, wherein the one-hot encoding uniquely identifies each character included in the text, regardless of language, and wherein the embedding is performed on the encoded text.

2. The device of claim 1, where the one or more processors are further to:
perform backpropagation using stochastic gradient descent and the data indicating the classification for the text.

3. The device of any one of the preceding claims, where the first sliding window and the second sliding window are the same or different.

4. The device of any one of the preceding claims, where the one or more processors, when subsampling the multiple sets of character representations to obtain the merged data structure, are further to:
concatenate the multiple sets of character representations into a concatenated vector; and
perform max over-time pooling on the concatenated vector.

5. The device of any one of the preceding claims, where the fully connected layer uses Rectified Linear Unit activation.

6. The device of any one of the preceding claims, where the parallel convolution comprises:
a first convolution neural network stage,
a second convolution neural network stage, and
a third convolution neural network stage,
the first convolution neural network stage and the second convolution neural network stage and the third convolution neural network stage being in parallel.

7. A computer implemented method, comprising:
obtaining, at an input layer of a convolutional neural network, text from a training document;
obtaining data indicating an input classification associated with the training document;
performing, at an embedding layer of the convolutional neural network, embedding to obtain a character vector indicating, for any character in the text, a probability associated with each other character included in the text;
applying, at a first convolution layer of the convolutional neural network, a first convolution to the character vector to obtain different first character representations relevant to the text, the first convolution using a first sliding window of characters;
providing the different first character representations obtained from the first convolution to a second convolution layer of the convolutional neural network performing a second convolution, the second convolution being configured to produce second character representations relevant to the first character representations obtained from the first convolution, the second convolution using a second sliding window of first character representations;
applying, at a parallel convolution layer of the convolutional neural network, parallel convolution to the second character representations obtained from the second convolution to obtain multiple sets of third character representations;
subsampling, at a pooling layer of the convolutional neural network, the multiple sets of third character representations and pooling the subsampled multiple sets of third character representations to obtain a merged vector of features associated with the text;
providing the merged vector to a fully connected layer of the convolutional neural network, to produce data representing features of the text;
providing the data representing features of the text to an inference layer of the convolutional neural network, that provides data indicating one or more classifications for the text;
training, by the device, the convolutional neural network by backpropagation using stochastic gradient descent, the data indicating the input classification, and data indicating the one or more classifications; and
training the convolutional neural network using multiple training documents as input, the multiple training documents including a first document having text in a first natural language and a second document having text in a second natural language, the second natural language being different from the first natural language,
wherein the method further comprises encoding the text, prior to performing the embedding, using one-hot encoding, wherein the one-hot encoding uniquely identifies each character included in the text, regardless of language and wherein the embedding is performed on the encoded text.

8. The method of claim 7, where applying the parallel convolution to the representations to obtain multiple sets of character representations comprises:
performing convolution using a sliding window of X, where X is an integer;
performing convolution using a sliding window of X+1; and
performing convolution using a sliding window of X+2.

9. A computer-readable medium comprising instructions which, when executed by one or more processors, cause the one or more processors to carry out the method of claim 7 or 8.

10. The computer-readable medium of claim 9, further comprising instructions, when executed by the one or more processors, cause the one or more processors to:
obtain the input layer of a convolutional neural network, second text from a second document,
the second text being associated with a second natural language that is different from a first natural language associated with the first document;
perform, at the embedding layer of the convolutional neural network, embedding to obtain a second character vector indicating, for any character in the second text, a probability associated with each other character included in the second text;
apply, at a first convolution layer of the convolutional neural network, the first convolution to the second character vector to obtain different fourth character representations relevant to the second text;
provide the different fourth character representations from the first convolution to the second convolution layer of the convolutional neural network and performing, at the second convolution layer a second convolution, the second convolution being configured to produce fifth character representations relevant to the fourth character representations obtained from the first convolution, the second convolution using a second sliding window of fourth character representations;
apply, at the parallel convolution layer of the convolutional neural network, the parallel convolution to the fifth character representations obtained from the second convolution to obtain multiple sets of sixth character representations,
subsample, at the pooling layer of the convolutional neural network, the multiple sets of sixth character representations and pool the subsampled multiple sets of sixth character representations to obtain a second merged data structure;
provide the second merged data structure to multiple fully connected layers of the convolutional neural network, to produce data representing features of the second text; and
provide the data representing features of the second text to the inference layer of the convolutional neural network that provides data indicating a second classification for the second document.

11. The computer-readable medium of claim 9 or 10,
where the fully connected layers each includes a dropout operation to randomly drop portions of the data representing features of the first text.

## Patentansprüche

1. Vorrichtung, aufweisend:
eine oder mehrere Speichervorrichtungen; und
einen oder mehrere Prozessoren, die kommunikativ mit der einen oder den mehreren Speichervorrichtungen verbunden sind, um:
auf einer Eingabeschicht eines Convolutional Neural Network Text aus einem Dokument zu erhalten;
auf einer Einbettungsschicht des Convolutional Neural Network eine Einbettung durchzuführen, um einen Zeichenvektor zu erhalten, der für jedes Zeichen in dem Text eine Wahrscheinlichkeit angibt, die jedem anderen in dem Text enthaltenen Zeichen zugeordnet ist;
auf einer ersten Convolutional-Schicht des Convolutional Neural Network eine erste Convolution auf den Zeichenvektor anzuwenden, um verschiedene erste Zeichendarstellungen zu erhalten, die für den Text relevant sind, wobei die erste Convolution ein erstes gleitendes Fenster von Zeichen verwendet;
die verschiedenen ersten Zeichendarstellungen, die aus der ersten Convolution erhalten werden, an eine zweite Convolutional-Schicht des Convolutional Neural Network bereitzustellen, die eine zweite Convolution durchführt, wobei die zweite Convolution derart konfiguriert ist, dass sie zweite Zeichendarstellungen erzeugt, die für die ersten Zeichendarstellungen relevant sind, die aus der ersten Convolution erhalten werden, wobei die zweite Convolution ein zweites gleitendes Fenster von ersten Zeichendarstellungen verwendet;
auf einer parallelen Convolutional-Schicht des Convolutional Neural Network eine parallele Convolution auf die aus der zweiten Convolution erhaltenen zweiten Zeichendarstellungen anzuwenden, um mehrere Sätze von dritten Zeichendarstellungen zu erhalten;
Subsampling an den mehreren Sätzen von dritten Zeichendarstellungen auf einer Pooling-Schicht des Convolutional Neural Network durchzuführen und Pooling an den mehreren Sätzen von dritten Zeichendarstellungen, an denen Subsampling durchgeführt wurde, in eine zusammengeführte Datenstruktur durchzuführen;
die zusammengeführte Datenstruktur einer vollverknüpften Schicht des Convolutional Neural Network bereitzustellen, um Daten zu erzeugen, die Textmerkmale darstellen; und
die Daten, die Merkmale des Textes darstellen, an eine Interferenzschicht des Convolutional Neural Network bereitzustellen, welche Daten bereitstellt, die eine Klassifizierung für den Text angeben,
wobei das Convolutional Neural Network durch viele Trainingsdokumente als Eingabe trainiert wurde, wobei die vielen Trainingsdokumente ein erstes Dokument, das Text in einer ersten natürlichen Sprache aufweist, und ein zweites Dokument, das Text in einer zweiten natürlichen Sprache aufweist, umfassen, wobei sich die zweite natürliche Sprache von der ersten natürlichen Sprache unterscheidet,
wobei der eine oder die mehreren Prozessoren ferner konfiguriert sind, den Text vor der Durchführung der Einbettung vermittels One-Hot-Codierung zu codieren, wobei die One-Hot-Codierung jedes in dem Text enthaltene Zeichen unabhängig von der Sprache eindeutig identifiziert und wobei die Einbettung auf dem codierten Text durchgeführt wird.

2. Vorrichtung nach Anspruch 1, wobei der eine oder die mehreren Prozessoren ferner derart konfiguriert sind, dass sie:
Backpropagation vermittels stochastischem Gradientenabstieg und der Daten, welche die Klassifizierung für den Text angeben, durchführen.

3. Vorrichtung nach einem der vorstehenden Ansprüche, wobei das erste gleitende Fenster und das zweite gleitende Fenster gleich oder verschieden sind.

4. Vorrichtung nach einem der vorstehenden Ansprüche, wobei der eine oder die mehreren Prozessoren beim Subsampling der mehreren Sätze von Zeichendarstellungen, um die zusammengeführte Datenstruktur zu erhalten, ferner derart konfiguriert sind, dass sie:
die mehreren Sätze von Zeichendarstellungen zu einem verketteten Vektor verketten; und
ein zeitabhängiges Max-Pooling an dem verketteten Vektor durchführen.

5. Vorrichtung nach einem der vorstehenden Ansprüche, wobei die vollverknüpfte Schicht die Aktivierung einer ReLU (Rectified Linear Unit) verwendet.

6. Vorrichtung nach einem der vorstehenden Ansprüche, wobei die parallele Convolution umfasst:
eine erste Stufe des Convolutional Neural Network,
eine zweite Stufe des Convolutional Neural Network, und
eine dritte Stufe des Convolutional Neural Network,
wobei die erste Stufe des Convolutional Neural Network und die zweite Stufe des Convolutional Neural Network und die dritte Stufe des Convolutional Neural Network parallel zueinander sind.

7. Computerimplementiertes Verfahren, umfassend:
Erhalten von Text aus einem Trainingsdokument auf einer Eingabeschicht eines Convolutional Neural Network;
Erhalten von Daten, die eine dem Trainingsdokument zugeordnete Eingangsklassifikation angeben;
Durchführen der Einbettung auf einer Einbettungsschicht des Convolutional Neural Network, um einen Zeichenvektor zu erhalten, der für jedes Zeichen in dem Text eine Wahrscheinlichkeit angibt, die jedem anderen in dem Text enthaltenen Zeichen zugeordnet ist;
Anwenden einer ersten Convolution auf einer ersten Convolutional-Schicht des Convolutional Neural Network auf den Zeichenvektor, um verschiedene erste Darstellungen von Zeichen zu erhalten, die für den Text relevant sind, wobei die erste Convolution ein erstes gleitendes Fenster von Zeichen verwendet;
Bereitstellen der verschiedenen ersten Zeichendarstellungen, die aus der ersten Convolution erhalten werden, an eine zweite Convolutional-Schicht des Convolutional Neural Network, die eine zweite Convolution durchführt, wobei die zweite Convolution derart konfiguriert ist, dass sie zweite Zeichendarstellungen erzeugt, die für die ersten Zeichendarstellungen relevant sind, die aus der ersten Convolution erhalten werden, wobei die zweite Convolution ein zweites gleitendes Fenster der ersten Zeichendarstellungen verwendet;
Anwenden einer parallelen Convolutional-Schicht des Convolutional Neural Network auf die aus der zweiten Convolution erhaltenen zweiten Zeichendarstellungen, um mehrere Sätze von dritten Zeichendarstellungen zu erhalten;
Subsampling der mehreren Sätze von dritten Zeichendarstellungen auf einer Pooling-Schicht des Convolutional Neural Network und Pooling der mehreren Sätze von dritten Zeichendarstellungen, an denen Subsampling durchgeführt wurde, um einen zusammengeführten Vektor von dem Text zugeordneten Merkmalen zu erhalten;
Bereitstellen des zusammengeführten Vektors an eine vollverknüpfte Schicht des Convolutional Neural Network, um Daten zu erzeugen, die Merkmale des Textes darstellen;
Bereitstellen der Daten, die Merkmale des Textes darstellen, an eine Interferenzschicht des Convolutional Neural Network, die Daten bereitstellt, die eine oder mehrere Klassifizierungen für den Text angeben;
Trainieren des Convolutional Neural Network durch die Vorrichtung durch Backpropagation vermittels stochastischem Gradientenabstieg, wobei die Daten die Eingabeklassifikation angeben, und Daten, welche die eine oder mehrere Klassifikationen angeben; und
Trainieren des Convolutional Neural Network unter Verwendung mehrerer Trainingsdokumente als Eingabe, wobei die mehreren Trainingsdokumente ein erstes Dokument, das Text in einer ersten natürlichen Sprache aufweist, und ein zweites Dokument, das Text in einer zweiten natürlichen Sprache aufweist, umfassen, wobei sich die zweite natürliche Sprache von der ersten natürlichen Sprache unterscheidet,
wobei das Verfahren ferner das Codieren des Texts vor der Durchführung der Einbettung vermittels One-Hot-Codierung umfasst, wobei die One-Hot-Codierung jedes in dem Text enthaltene Zeichen unabhängig von der Sprache eindeutig identifiziert und wobei die Einbettung an dem codierten Text durchgeführt wird.

8. Verfahren nach Anspruch 7, wobei das Anwenden der parallelen Convolution auf die Darstellungen, um mehrere Sätze von Zeichendarstellungen zu erhalten, umfasst:
Durchführen einer Convolution vermittels eines gleitenden Fensters von X, wobei X eine ganze Zahl ist;
Durchführen einer Convolution vermittels eines gleitenden Fensters von X + 1; und
Durchführen einer Convolution vermittels eines gleitenden Fensters von X + 2.

9. Computerlesbares Medium mit Anweisungen, die, wenn sie von einem oder mehreren Prozessoren ausgeführt werden, den einen oder die mehreren Prozessoren veranlassen, das Verfahren nach Anspruch 7 oder 8 durchzuführen.

10. Computerlesbares Medium nach Anspruch 9, ferner aufweisend Anweisungen, die, wenn sie von dem einen oder den mehreren Prozessoren ausgeführt werden, den einen oder die mehreren Prozessoren dazu veranlassen:
auf der Eingabeschicht eines Convolutional Neural Network einen zweiten Text aus einem zweiten Dokument erhalten,
wobei der zweite Text einer zweiten natürlichen Sprache zugeordnet ist, die sich von der ersten natürlichen Sprache unterscheidet, die dem ersten Dokument zugeordnet ist;
auf der Einbettungsschicht des Convolutional Neural Network die Einbettung durchzuführen, um einen zweiten Zeichenvektor zu erhalten, der für jedes Zeichen in dem zweiten Text eine Wahrscheinlichkeit angibt, die jedem anderen in dem zweiten Text enthaltenen Zeichen zugeordnet ist;
auf einer ersten Convolutional-Schicht des Convolutional Neural Network die erste Convolution auf den zweiten Zeichenvektor anzuwenden, um verschiedene vierte Darstellungen von Zeichen zu erhalten, die dem zweiten Text entsprechen;
die verschiedenen vierten Zeichendarstellungen aus der ersten Convolution für die zweite Convolutional-Schicht des Convolutional Neural Network bereitzustellen und eine zweite Convolution auf der zweiten Convolutional-Schicht durchzuführen, wobei die zweite Convolution derart konfiguriert ist, dass sie fünfte Zeichendarstellungen erzeugt, die für die aus der ersten Convolution erhaltenen vierten Zeichendarstellungen relevant sind, wobei die zweite Convolution ein zweites gleitendes Fenster für vierte Zeichendarstellungen verwendet;
auf der parallelen Convolutional-Schicht des Convolutional Neural Network die parallele Convolution auf die fünften Zeichendarstellungen anzuwenden, die aus der zweiten Convolution erhalten werden, um mehrere Sätze von sechsten Zeichendarstellungen zu erhalten,
Subsampling der mehreren Sätze von sechsten Zeichendarstellungen auf der Pooling-Schicht des Convolutional Neural Network durchzuführen und Pooling der mehreren Sätze von sechsten Zeichendarstellungen durchzuführen, um eine zweite zusammengefügte Datenstruktur zu erhalten;
die zweite zusammengeführte Datenstruktur bereitzustellen, um vollverknüpfte Schichten des Convolutional Neural Network zu multiplizieren, um Daten zu erzeugen, die Merkmale des zweiten Textes darstellen; und
die Daten, die Merkmale des zweiten Textes darstellen, an die Interferenzschicht des Convolutional Neural Network bereitzustellen, die Daten bereitstellt, die eine zweite Klassifizierung für das zweite Dokument angeben.

11. Computerlesbares Medium nach Anspruch 9 oder 10,
wobei die vollverknüpften Schichten jeweils einen Löschvorgang zum statistischen Entfernen von Teilen der Daten umfassen, die Merkmale des ersten Texts darstellen.

## Revendications

1. Dispositif comprenant :
un ou plusieurs dispositifs de mémoire ; et
un ou plusieurs processeurs connectés en communication aux un ou plusieurs dispositifs de mémoire pour :
obtenir, sur une couche d'entrée d'un réseau neuronal convolutif, du texte à partir d'un document ;
effectuer, sur une couche d'intégration du réseau neuronal convolutif, une intégration pour obtenir un vecteur de caractères indiquant, pour chaque caractère dans le texte, une probabilité associée à tout autre caractère inclus dans le texte ;
appliquer, sur une première couche de convolution du réseau neuronal convolutif, une première convolution au vecteur de caractères pour obtenir différentes premières représentations de caractère correspondant au texte, la première convolution utilisant une première fenêtre glissante de caractères ;
fournir les différentes premières représentations de caractères obtenues de la première convolution à une deuxième couche de convolution du réseau neuronal convolutif en réalisant une deuxième convolution, la deuxième convolution étant configurée pour produire des deuxièmes représentations de caractères correspondant aux premières représentations de caractères obtenues de la première convolution, la deuxième convolution utilisant une deuxième fenêtre de glissement des premières représentations de caractères ;
appliquer, sur une couche de convolution parallèle du réseau neuronal convolutif, une convolution parallèle aux deuxièmes représentations de caractères obtenues de la deuxième convolution pour obtenir de multiples ensembles de troisièmes représentations de caractères ;
sous-échantillonner, sur une couche de regroupement du réseau neuronal convolutif, les multiples ensembles de troisièmes représentations de caractères et regrouper les multiples ensembles sous-échantillonnés de troisièmes représentations de caractères en une structure de données fusionnée ;
fournir la structure de données fusionnée à une couche entièrement connectée du réseau neuronal convolutif pour produire des données représentant des caractéristiques du texte ; et
fournir les données représentant des caractéristiques du texte à une couche d'interférence du réseau neuronal convolutif qui fournit des données indiquant une classification pour le texte,
dans lequel le réseau neuronal convolutif a été entraîné par de nombreux documents d'entraînement en tant qu'entrée, les nombreux documents d'entraînement comportant un premier document présentant du texte dans un premier langage naturel et un deuxième document présentant du texte dans un deuxième langage naturel, le deuxième langage naturel étant différent du premier langage naturel,
dans lequel les un ou plusieurs processeurs sont configurés en outre pour coder le texte avant de réaliser l'intégration, en utilisant un codage à chaud, dans lequel le codage à chaud identifie uniquement chaque caractère inclus dans le texte indépendamment du langage et dans lequel l'intégration est réalisée sur le texte codé.

2. Dispositif selon la revendication 1, dans lequel les un ou plusieurs processeurs sont configurés en outre pour :
réaliser la rétropropagation en utilisant une descente stochastique de gradient et les données indiquant la classification pour le texte.

3. Dispositif selon l'une quelconque des revendications précédentes, dans lequel la première fenêtre de glissement et la deuxième fenêtre de glissement sont les mêmes ou sont différentes.

4. Dispositif selon l'une quelconque des revendications précédentes, dans lequel les un ou plusieurs processeurs lors du sous-échantillonnage des multiples ensembles de représentations de caractères pour obtenir la structure de données fusionnée, sont configurés en outre pour :
concaténer les multiples ensembles de représentations de caractères en un vecteur concaténé ; et
réaliser un regroupement max au fil du temps sur le vecteur concaténé.

5. Dispositif selon l'une quelconque des revendications précédentes, dans lequel la couche entièrement connectée utilise une activation d'unité linéaire rectifiée.

6. Dispositif selon l'une quelconque des revendications précédentes, dans lequel la convolution parallèle comprend :
un premier étage de réseau neuronal convolutif,
un deuxième étage de réseau neuronal convolutif, et
un troisième étage de réseau neuronal convolutif,
le premier étage de réseau neuronal convolutif et le deuxième étage de réseau neuronal convolutif et le troisième étage de réseau neuronal convolutif étant parallèles.

7. Procédé mis en oeuvre par un ordinateur, comprenant :
l'obtention, sur une couche entrée d'un réseau neuronal convolutif, de texte à partir d'un document d'entraînement ;
l'obtention de données indiquant une classification d'entrée associée au document d'entraînement ;
la réalisation, sur une couche d'intégration du réseau neuronal convolutif, de l'intégration pour obtenir un vecteur de caractères indiquant, pour chaque caractère dans le texte, une probabilité associée à chaque autre caractère compris dans le texte ;
l'application, sur une première couche de convolution du réseau neuronal convolutif, d'une première convolution sur le vecteur de caractères pour obtenir différentes premières représentations de caractères correspondant au texte, la première convolution utilisant une première fenêtre de glissement de caractères ;
la fourniture des différentes premières représentations de caractères obtenues de la première convolution à une deuxième couche de convolution du réseau neuronal convolutif en réalisant une deuxième convolution, la deuxième convolution étant configurée pour produire des deuxièmes représentations de caractères correspondant aux premières représentations de caractères obtenues de la première convolution, la deuxième convolution utilisant une deuxième fenêtre de glissement de premières représentations de caractères ;
l'application, sur une couche de convolution parallèle du réseau neuronal convolutif, une convolution parallèle aux deuxièmes représentations de caractères obtenues de la deuxième convolution pour obtenir de multiples ensembles de troisièmes représentations de caractères ;
le sous-échantillonnage, sur une couche de regroupement du réseau neuronal convolutif, des multiples ensembles de troisièmes représentations de caractères et le regroupement des multiples ensembles sous-échantillonnés de troisièmes représentations de caractères pour obtenir un vecteur fusionné de caractéristiques associées au texte ;
la fourniture du vecteur fusionné à une couche entièrement connectée du réseau neuronal convolutif pour produire des données représentant des caractéristiques du texte ;
la fourniture des données représentant des caractéristiques du texte à une couche d'interférence du réseau neuronal convolutif qui fournit des données indiquant une ou plusieurs classifications pour le texte ;
l'entraînement, par le dispositif, du réseau neuronal convolutif par rétropropagation en utilisant une descente de gradient stochastique, les données indiquant la classification d'entrée, et des données indiquant les une ou plusieurs classifications ; et
l'entraînement du réseau neuronal convolutif en utilisant de multiples documents d'entraînement en tant qu'entrée, les multiples documents d'entraînement comportant un premier document présentant du texte dans un premier langage naturel et un deuxième document présentant du texte dans un deuxième langage naturel, le deuxième langage naturel étant différent du premier langage naturel,
dans lequel le procédé comprend en outre le codage du texte avant la réalisation de l'intégration, en utilisant un codage à chaud, dans lequel le codage à chaud identifie uniquement chaque caractère compris dans le texte indépendamment du langage et dans lequel l'intégration est réalisée sur le texte codé.

8. Procédé selon la revendication 7, dans lequel l'application de la convolution parallèle aux représentations pour obtenir de multiples ensembles de représentations de caractères comprend :
la réalisation d'une convolution en utilisant une fenêtre de glissement de X, dans lequel X est un nombre entier ;
la réalisation d'une convolution en utilisant une fenêtre de glissement de X + 1 ; et
la réalisation d'une convolution en utilisant une fenêtre de glissement de X + 2.

9. Support lisible par ordinateur comprenant des instructions, qui, lorsqu'elles sont exécutées par un ou plusieurs processeurs, amènent les un ou plusieurs processeurs à effectuer le procédé selon la revendication 7 ou 8.

10. Support lisible par ordinateur selon la revendication 9, comprenant en outre des instructions, qui, lorsqu'elles sont exécutées par les un ou plusieurs processeurs, amènent les un ou plusieurs processeurs à :
obtenir, sur la couche d'entrée d'un réseau neuronal convolutif, un deuxième texte à partir d'un deuxième document,
le deuxième texte étant associé à un deuxième langage naturel qui est différent du premier langage naturel associé au premier document ;
réaliser, sur la couche d'intégration du réseau neuronal convolutif, l'intégration pour obtenir un deuxième vecteur de caractères indiquant, pour chaque caractère dans le deuxième texte, une probabilité associée à chaque autre caractère compris dans le deuxième texte ;
appliquer, sur une première couche de convolution du réseau neuronal convolutif, la première convolution au deuxième vecteur de caractères pour obtenir différentes quatrièmes représentations de caractères correspondant au deuxième texte ;
fournir les différentes quatrièmes représentations de caractères provenant de la première convolution à la deuxième couche de convolution du réseau neuronal convolutif et réaliser, sur la deuxième couche de convolution, une deuxième convolution, la deuxième convolution étant configurée pour produire des cinquièmes représentations de caractères correspondant aux quatrièmes représentations de caractères obtenues de la première convolution, la deuxième convolution utilisant une deuxième fenêtre de glissement de quatrièmes représentations de caractères ;
appliquer, sur la couche de convolution parallèle du réseau neuronal convolutif, la convolution parallèle aux cinquièmes représentations de caractères obtenues de la deuxième convolution pour obtenir de multiples ensembles de sixièmes représentations de caractères,
sous-échantillonner, sur la couche de regroupement du réseau neuronal convolutif, les multiples ensembles de sixièmes représentations de caractères et regrouper les multiples ensembles sous-échantillonnés de sixièmes représentations de caractères pour obtenir une deuxième structure de données fusionnée ;
fournir la deuxième structure de données fusionnée pour multiplier des couches entièrement connectées du réseau neuronal convolutif pour produire des données représentant des caractéristiques du deuxième texte ; et
fournir les données représentant des caractéristiques du deuxième texte à la couche d'interférence du réseau neuronal convolutif qui fournit des données indiquant une deuxième classification pour le deuxième document.

11. Support lisible par ordinateur selon la revendication 9 ou 10,
dans lequel les couches complètement connectées comportent chacune une opération de suppression pour supprimer de manière aléatoire des parties des données représentant des caractéristiques du premier texte.
